# EUROPÄISCHE PATENTSCHRIFT

(11) **EP 3 309 917 B1**
(45) Veröffentlichungstag und Bekanntmachung des Hinweises auf die Patenterteilung: **25.12.2019**
(21) Anmeldenummer: 17195006.6
(22) Anmeldetag: 05.10.2017
(51) Int. Cl.: H01R 13/447, H02G 3/14

(54) **VORRICHTUNG MIT EINER BERÜHRUNGSGESCHÜTZTEN ANORDNUNG ELEKTRISCHER ANSCHLUSSELEMENTE**
DEVICE WITH A CONTACT PROTECTED ARRANGEMENT OF ELECTRICAL CONTACT ELEMENTS
DISPOSITIF POURVU D'AGENCEMENT DES ÉLÉMENTS DE CONNEXION ÉLECTRIQUES PROTÉGÉ CONTRE LES RISQUES DE CONTACT

(30) Priorität: 14.10.2016 DE 102016119665
(43) Veröffentlichungstag der Anmeldung: 18.04.2018
(73) Patentinhaber: Trippe Industrieelectronic GmbH, 44379 Dortmund (DE)
(72) Erfinder: Trippe, Thorsten, 44577 Castrop-Rauxel (DE); Nitsche, Reinhard, 44269 Dortmund (DE); Moldenhauer, Martin, 44388 Dortmund (DE)
(74) Vertreter: Kalkoff & Partner

(56) Entgegenhaltungen:
- EP-A1- 3 079 209
- WO-A1-2013/089979
- DE-A1- 2 150 980

## Beschreibung

Die Erfindung betrifft eine Vorrichtung mit einer berührungsgeschützten Anordnung elektrischer Anschlusselemente, insbesondere für mobile Heizgeräte oder eine mobile Elektroheizzentrale.

Vorrichtungen zum Schutz eines Benutzers vor einem Kontakt mit stromführenden elektrischen Anschlusselementen sind in vielfältiger Ausgestaltung aus dem Stand der Technik bekannt.

Bei Vorrichtungen mit mehreren, alternativ zueinander nutzbaren, elektrischen Anschlusselementen, insbesondere Anschlussbuchsen oder -steckern zur Stromversorgung eines elektrischen Verbrauchers, ist es zum einen üblich, die nicht verwendeten Anschlusselemente von einem verwendeten Anschlusselement, beispielsweise mittels eines Relais, zu trennen, um zu verhindern, dass ein Benutzer versehentlich ein stromführendes Bauteil berührt und dadurch zu Schaden kommt. Jedoch kann es dabei zu Fehlfunktionen bei der Trennung nicht verwendeter Anschlusselemente kommen, so dass dann - ohne das es für den Benutzer erkennbar ist - eine Gefahr der Verletzung besteht.

Weiterhin ist es aus dem Stand der Technik bekannt, jede einzelne Anschlussbuchse mit einem verschwenkbaren Deckel zu versehen, der auf eine geschlossene, stromführende Bauteile abdeckende Stellung mittels einer Feder vorgespannt ist und vor einer Benutzung der Anschlussbuchse geöffnet werden muss. Dieser Deckel hat jedoch den Nachteil, dass zum einen auch ein Öffnen des Deckels möglich ist, wenn die Anschlussbuchse in einem Bereich unter dem Deckel stromführende Bauteile aufweist und zum anderen verbleiben die Deckel bei längerer Benutzung aufgrund einer Ermüdung der auf eine geschlossene Stellung vorspannenden Feder in der geöffneten Stellung, obwohl kein Stecker mit der Anschlussbuchse verbunden ist, so dass wiederum von der stromführenden Anschlussbuchse eine Gefahr für einen Benutzer ausgeht. Darüber hinaus ist bei mehreren, jeweils mit einem individuellen Deckel versehenen Anschlussbuchsen nicht sichergestellt, dass zugleich mehrere Anschlussbuchsen verwendet werden, was nicht dem bestimmungsgemäßen Gebrauch entspricht und somit den Benutzer wie auch den elektrischen Verbraucher gefährden kann.

Schließlich ist es aus dem Stand der Technik bekannt, mehrere Anschlusselemente in einem Schaltschrank anzuordnen, der entsprechend schließbar und gegebenenfalls auch abschließbar ist. Jedoch ist auch hierbei nicht ausgeschlossen, dass ein Benutzer den Schaltschrank versehentlich offenlässt oder diesen öffnet und eines der Anschlusselemente berührt, in der Annahme, dass das entsprechende Bauteil keinen Strom führt bzw. keinen Strom führen sollte. Insbesondere im Zusammenhang mit einer automatischen Trennung mittels eines Relais kann es zu Unfällen kommen, wenn die Trennung nicht funktioniert und sich der Benutzer darauf verlässt, dass das Bauteil, insbesondere weitere Anschlusselemente, stromfrei sind.

Die Druckschrift WO 2013/089979 A1 zeigt eine versenkte Servicekabelbox zum Sichern einer Vielzahl von Netzwerkkabeln und zum Bereitstellen eines Zugangs zu einer Vielzahl von sicherbaren Netzwerkverbindungen, mindestens teilweise basierend auf einer Sicherheitsfreigabe zum Zugang zu einem bestimmten Sicherheitsklassifikationsnetzwerk. Die Servicekabelbox umfasst dabei ein Gehäuse, eine erste Verbindungskammer, die sich innerhalb des Gehäuses befindet, eine zweite Verbindungskammer, die sich innerhalb des Gehäuses befindet, und ein Verbindermodul, welches die erste Verbindungskammer von der zweiten Verbindungskammer trennt. Weiterhin weist die Servicekabelbox eine Sperrplatte auf, die mit dem Gehäuse gekoppelt ist, wobei die Sperrplatte eine Öffnung aufweist und die Sperrplatte so dimensioniert und ausgelegt ist, um die erste Verbindungskammer abzudecken und Zugang zu dieser zu verhindern. Darüber hinaus weist die Servicekabelbox eine Tür auf, die mit dem Gehäuse und der Sperrplatte gekoppelt ist, wobei die Tür zum Aufschieben ausgelegt ist und ferner dafür ausgelegt ist, durch die Öffnung in der Frontsperrplatte selektiv Zugang zu der zweiten Verbindungskammer bereitzustellen. Schließlich umfasst die Servicekabelbox ein Schloss, um die Tür relativ zur Sperrplatte zu verriegeln.

Die Druckschrift EP 3 079 209 A1 offenbart eine Befestigungseinrichtung zur Befestigung eines ersten elektrischen und/oder elektronischen Betriebselementes, insbesondere eines Lichtschalters, und eines zweiten elektrischen und/oder elektronischen Betriebselementes, insbesondere einer Steckdose, an oder in einer Wand, wobei das erste Betriebselement in eine erste Position und in eine zweite Position bringbar ist und das zweite Betriebselement nur zugänglich ist, wenn sich das erste Betriebselement in der zweiten Position befindet.

Die Druckschrift DE 2150 980 A1 zeigt eine elektrische Anschluss-Steckdose, insbesondere für Außenwände an Wohnwagen, mit einem am Steckergehäuse in Schiebeführungen aufgenommenen, mit der Wohnwagenwand flächengleich verlaufenden Abschlussdeckel, wobei die Anschluss-Steckdose in einem einzigen Fach mehrere Steckerausbildungen in sich vereinigt, die unterschiedlichen Kupplungsanordnungen zugehören, von denen wahlweise jeweils alle Steckerausbildungen bis auf eine für eine Steckerkupplung frei zugängliche Steckerausbildung durch eine Zwangssperre gegen Benutzung gesichert sind.

Der Erfindung liegt daher die Aufgabe zu Grunde, eine Vorrichtung mit einer berührungsgeschützten Anordnung elektrischer Anschlusselemente bereitzustellen, bei der ausgeschlossen ist, dass ein Benutzer ein stromführendes Bauteil eines von mehreren Anschlusselementen berühren kann, wobei die Vorrichtung besonders ausfallsicher ist, eine geringe Anfälligkeit für Verschleiß aufweist und für den Benutzer der bestehende Schutz unmittelbar erkennbar ist sowie mittels der Vorrichtung in einfacher Weise ein nicht bestimmungsgemäßer zeitgleicher Anschluss mehrerer Anschlusselemente verhindert wird.

Die Aufgabe wird erfindungsgemäß durch eine Vorrichtung gemäß Anspruch 1 gelöst. Vorteilhafte Weiterbildungen der Erfindung sind in den abhängigen Ansprüchen angegeben.

Die erfindungsgemäße Vorrichtung mit einer berührungsgeschützten Anordnung elektrischer Anschlusselemente weist ein in mehrere Fächer unterteiltes, zu wenigstens einer Seite offenes Gehäuse, mehrere jeweils in einem der Fächer angeordnete elektrische Anschlusselemente und eine Schiebeabdeckung für alle Fächer ab dem zweiten Fach auf, wobei die wenigstens eine, bevorzugt mehreren Schiebeabdeckungen derart verschieblich am Gehäuse festgelegt sind, dass wenn eines der Fächer bzw. Anschlusselemente zugänglich ist, alle weiteren Fächer bzw. Anschlusselemente durch eine Schiebeabdeckung abgedeckt werden.

Durch die erfindungsgemäße Ausgestaltung der Vorrichtung kann in einfacher Weise erreicht werden, dass nach dem Anschluss eines Steckers an einem der Anschlusselemente die übrigen Anschlusselemente für einen Benutzer nicht mehr erreichbar sind, so dass unabhängig davon, ob weitere Sicherungsvorrichtungen zur Trennung der übrigen Anschlusselemente von stromführenden Teilen vorgesehen sind und tatsächlich auch funktionieren, ein wirksamer Schutz des Benutzers gewährleistet wird, wobei der Berührungsschutz auch nicht ohne eine Zerstörung der Vorrichtung von einem Benutzer deaktiviert oder umgangen werden kann.

Unter einer Vorrichtung mit einer berührungsgeschützten Anordnung elektrischer Anschlusselemente wird zunächst jede Vorrichtung verstanden, die mehrere Anschlusselemente aufweist, die jeweils oder insgesamt vor einer unerwünschten oder versehentlichen Berührung durch einen Benutzer geschützt sind. Bevorzugt ist die Vorrichtung zur Anordnung an bzw. innerhalb einer mobilen Elektroheizzentrale vorgesehen, mittels der eine elektrische Heizung eines Gebäudes vorgenommen werden kann, wenn keine eigene Heizanlage vorhanden oder diese nicht betriebsbereit ist. Besonders bevorzugt ist die erfindungsgemäße Vorrichtung innerhalb eines Gehäuses einer mobilen Elektroheizzentrale derart angeordnet, dass die offene Seite des Gehäuses der Vorrichtung an einer Außenseite der mobilen Elektroheizzentrale gelegen ist, wobei die einzelnen Anschlusselemente bzw. Schiebeabdeckungen für einen Benutzer der mobilen Elektroheizzentrale zugänglich sind. Insbesondere bevorzugt erfolgt der Anschluss einer elektrischen Anschlussleitung bzw. der Stromversorgung der mobilen Elektroheizzentrale über die Anschlusselemente der erfindungsgemäßen Vorrichtung. Dabei sind die einzelnen Anschlusselemente bevorzugt jeweils Anschlussstecker, so dass die Stromversorgung der mobilen Elektroheizzentrale über den Anschluss eines Kabels mit einer Buchse erfolgt. Bevorzugt ist die erfindungsgemäße Vorrichtung derart gebildet, dass ein Berührungsschutz gegen eine Berührung mit der Hand und insbesondere auch lediglich mit einem Finger erreicht wird. Besonders bevorzugt wird ein Schutz nach Schutzart IP10 und besonders bevorzugt nach IP20 gemäß der Norm DIN EN 60529 erreicht.

Das Gehäuse der erfindungsgemäßen Vorrichtung kann grundsätzlich eine beliebige Form aufweisen und aus einem beliebigen Material gebildet sein. Dabei kann das Gehäuse einstückig aus einem Material oder mehrstückig als Baugruppe gebildet sein, wobei insbesondere mehrere Bauteile der Baugruppe aus unterschiedlichen Materialen bestehen können. Bevorzugt ist das Gehäuse aus Metall und besonders bevorzugt aus Stahlblech. Das Gehäuse kann weiterhin beliebig oberflächenbehandelt oder beschichtet sein, beispielsweise eine Kunststoff- oder Gummibeschichtung, eine Lackierung oder eine Farbbeschichtung aufweisen. Bevorzugt ist das Gehäuse pulverbeschichtet und/oder verzinkt. Ebenfalls bevorzugt ist das Gehäuse einstückig gebildet.

Das Gehäuse ist im Inneren in mehrere voneinander abgetrennte Fächer unterteilt. Bevorzugt weist das Gehäuse im Inneren wenigstens zwei Fächer und bevorzugt wenigstens drei Fächer auf. Dabei können die Fächer grundsätzlich beliebige Maße aufweisen, solange diese groß genug sind, um ein elektrisches Anschlusselement vollständig aufzunehmen. Hierbei können alle Fächer gleich dimensioniert sein oder aber auch unterschiedliche Maße aufweisen. Insbesondere bevorzugt haben die Fächer dabei eine identische Höhe und Tiefe, aber voneinander abweichende Breiten in der Bewegungsrichtung der Schiebeabdeckungen. Insbesondere bevorzugt ist die Breite der Fächer an das darin angeordnete Anschlusselement angepasst, wobei das Fach bevorzugt jeweils nicht breiter als 200 %, besonders bevorzugt 150 % und ganz besonders bevorzugt 125 % der Breite des Anschlusselements ist.

Erfindungsgemäß sind in wenigstens zwei der Fächer jeweils ein Anschlusselement angeordnet. Darüber hinaus kann das Gehäuse auch noch weitere Fächer aufweisen, die kein Anschlusselement aufweisen und/oder eine weitere Funktion erfüllen. Besonders bevorzugt ist in jedem der Fächer ein Anschlusselement angeordnet.

Erfindungsgemäß weist das Gehäuse wenigstens eine abschnittsweise offene Seite auf, so dass das Innere des Gehäuses zugänglich ist und im Inneren des Gehäuses angeordnete Anschlusselemente mit einer Buchse und/oder einem Kabel, insbesondere zur Stromversorgung, verbunden werden können. Unter einer abschnittsweise offenen Seite wird eine Seite des Gehäuses verstanden, die eine Öffnung aufweist, die wenigstens so groß ist, dass durch diese alle Fächer mit Anschlusselementen zugänglich sind. Bevorzugt ist jedes der Fächer, insbesondere jedes Fach in dem ein Anschlusselement angeordnet ist, von der offenen Seite des Gehäuses her zugänglich.

Unter einem elektrischen Anschlusselement wird grundsätzlich ein beliebiges Element zum elektrischen Anschluss eines elektrisch leitenden Bauteils, insbesondere eines Kabels, eines mit einem Kabel verbunden Steckers bzw. einer Buchse oder einer beliebigen anderen Verbindung, verstanden. Bevorzugt ist wenigstens eines, besonders bevorzugt sind alle Anschlusselemente standardisiert gebildet. Weiterhin bevorzugt ist jedes Anschlusselement ein Anschlussstecker. Besonders bevorzugt sind die Anschlusselemente CEE-Stecker, insbesondere CEE Geräteeinbaustecker. Dabei kann es sich beispielsweise um einen 400 V - 16 A CEE-Stecker, einen 400 V - 32 A CEE-Stecker und/oder einen 400 V - 63 A CEE-Stecker handeln. Ebenfalls bevorzugt ist das Anschlusselement ein Drehstrom- bzw. Dreiphasenanschlusselement und/oder hat fünf Pole, insbesondere drei Leiter, einen Nicht- bzw. Neutralleiter und einen Schutzleiter. Bevorzugt unterscheiden sich wenigstens zwei, besonders bevorzugt alle Anschlusselemente bezüglich der Form, Größe und/oder des Standards voneinander.

Dabei ist das Anschlusselemente insbesondere derart ausgerichtet im Inneren des Gehäuses festgelegt, dass die Seite des Anschlusselements zum elektrischen Anschluss auf die offene Seite des Gehäuses und/oder die Schiebeabdeckung zuweist. Ebenfalls bevorzugt ist wenigstens eines der Anschlusselemente, besonders bevorzugt sind alle Anschlusselemente in dem Fach an der der offenen Seite des Gehäuses bzw. der Schiebeabdeckung gegenüberliegenden Seite angeordnet. Weiterhin bevorzugt sind alle Anschlusselemente bzw. die Zentren aller Anschlusselemente in einer Reihe und/oder auf einer gemeinsamen Höhe am Gehäuse angeordnet. Besonders bevorzugt ist jedes als Stecker gebildetes Anschlusselement derart in dem Fach innerhalb des Gehäuses angeordnet, dass ein Deckel einer Buchse an einem Anschlusskabel zum Anschluss an dem Anschlusselement innerhalb des Faches angeordnet werden kann, wobei ganz besonders bevorzugt das Fach so groß und/oder das Anschlusselement derart im Fach angeordnet ist, dass ein solcher, um 180° vollständig geöffneter Deckel innerhalb des Faches aufgenommen werden kann. Insbesondere bevorzugt ist das Anschlusselement nicht mittig im Fach, sondern in der Höhe und/oder seitlich verschoben angeordnet. Besonders bevorzugt sind alle Anschlusselemente in der Bewegungsrichtung der Schiebeabdeckungen mittig im jeweiligen Fach und in der Höhe unterhalb der Mitte des Fachs angeordnet.

Erfindungsgemäß ist für alle Fächer ab dem zweiten Fach eine Schiebeabdeckung vorgesehen, so dass jeweils wenigstens alle Fächer, die ein Anschlusselement aufweisen, bis auf ein einziges Fach mittels den Schiebeabdeckungen zumindest teilweise abgedeckt bzw. geschlossen werden können. Die erfindungsgemäße Vorrichtung weist also generell eine Schiebeabdeckung weniger auf, als das Gehäuse Fächer hat bzw. als die Anzahl der Anschlusselemente in jeweils einem Fach. Dabei kann eine Schiebeabdeckung zunächst beliebig geformt sein und aus einem beliebigen Material bestehen. Bevorzugt ist jede Schiebeabdeckung aus dem gleichen Material gebildet wie das Gehäuse. Weiterhin bevorzugt ist jede Schiebeabdeckung einstückig gebildet. Ebenfalls bevorzugt weist jede Schiebeabdeckung ein Griffelement an einer Außenseite zum Verschieben auf.

Dabei verdeckt jede Schiebeabdeckung das Anschlusselement im jeweiligen Fach wenigstens zu 50 %, bevorzugt wenigstens zu 75 %, besonders bevorzugt wenigstens zu 90 % und ganz besonders bevorzugt vollständig. Ebenfalls bevorzugt verschließt die Schiebeabdeckung wenigstens 80 % der Breite des jeweiligen Faches, besonders bevorzugt wenigstens 80 % der Breite des breitesten Faches und ganz besonders bevorzugt deckt jede Schiebeabdeckung das jeweilige Fach vollständig ab und/oder ist wenigstens genauso breit wie das abzudeckende Fach.

Jede Schiebeabdeckung ist bevorzugt lediglich in einer Raumrichtung verschieblich am Gehäuse festgelegt, wobei besonders bevorzugt jede Schiebeabdeckung so verschieblich angeordnet ist, dass wahlweise eines von zwei Fächern abgedeckt werden kann. Bevorzugt sind alle Schiebeabdeckungen derart gebildet und an dem Gehäuse angeordnet, dass bei einem Anschluss eines Steckers bzw. elektrischen Elements an einem der Anschlusselemente alle Schiebeabdeckungen nicht mehr so weit verschoben werden können, dass eines der anderen Anschlusselemente für einen Benutzer zugänglich ist bzw. von einem Benutzer berührt werden kann. Dazu ist ein sich beim Verschieben trotz eines angeschlossenen Steckers bildender Spalt bevorzugt kleiner als 5 cm, besonders bevorzugt kleiner als 2,5 cm und ganz besonders bevorzugt kleiner als 1,25 cm.

Bei einer vorteilhaften Ausgestaltung der erfindungsgemäßen Vorrichtung sind die einzelnen Fächer in dem Gehäuse durch jeweils eine Trennwand von den benachbarten Fächern abgetrennt, wodurch in besonders einfacher Weise eine Unterteilung des Inneren des Gehäuses in einzelne Fächer erreicht werden kann und zugleich sichergestellt ist, dass ein Benutzer nicht durch ein offenes Fach mit einem angeschlossenen Anschlusselement in ein benachbartes Fach mit einem freien Anschlusselement hinübergreifen kann. Bevorzugt ist jede der Trennwände dabei einstückig gebildet. Ebenfalls bevorzugt ist jede Trennwand kraft- und/oder stoffschlüssig an dem Gehäuse festgelegt, insbesondere angeschraubt, angenietet oder angeschweißt. Weiterhin bevorzugt erstreckt sich die Trennwand vollständig bis zu einer der offenen Seite des Gehäuses gegenüberliegenden Seite im Gehäuse, an der besonders bevorzugt das Anschlusselement festgelegt ist. Besonders bevorzugt ist die Trennwand zu drei Seiten zumindest teilweise, ganz besonders bevorzugt über die gesamte Länge der jeweiligen Seite der Trennwand an dem Gehäuse festgelegt.

Nach einer bevorzugten Weiterbildung der erfindungsgemäßen Vorrichtung sind alle Schiebeabdeckungen in einer gemeinsamen Führung verschieblich angeordnet, wodurch in besonders vorteilhafter Weise verhindert wird, dass die Schiebeabdeckungen aneinander vorbeigeschoben werden können und somit mehr als eines der Fächer zugleich geöffnet sein kann. Dazu sind alle Schiebeabdeckungen bevorzugt in der Bewegungsrichtung der Schiebeabdeckungen hintereinander in der Führung und/oder innerhalb der Führung aneinander angrenzend angeordnet.

Nach einer weiteren bevorzugten Weiterbildung der erfindungsgemäßen Vorrichtung ist die Führung als Führungsschiene gebildet, wobei alle Schiebeabdeckungen bevorzugt jeweils an zwei Kanten und besonders bevorzugt über die gesamte Breite der Schiebeabdeckungen in deren Bewegungsrichtung in einer Führungsschiene geführt sind, wodurch in einfacher Weise eine verwinkelungsfreie und besonders stabile Führung erreicht werden kann. Unter einer Führungsschiene wird dabei zunächst jede Anordnung von einem oder mehreren Bauteilen verstanden, die ein eine Kante der Schiebeabdeckung zu drei Seiten umgreifendes bzw. ein u-förmiges Profil aufweist, um eine gleitende Führung der Schiebeabdeckung zu gewährleisten.

Bei einer vorteilhaften Ausgestaltung der erfindungsgemäßen Vorrichtung ist jede der Führungsschienen aus einem die Schiebeabdeckung von einer Richtung her abstützenden Teil des Gehäuses und aus einem die Schiebeabdeckung von einer gegenüberliegenden Richtung her abstützenden Winkelelement gebildet, wobei das Winkelelement bevorzugt einstückig gebildet und/oder an dem Gehäuse angeschraubt ist, wodurch die Führung in besonders einfach aufgebaut ist und zugleich in besonders einfacher Weise ein Austausch der Schiebeabdeckung möglich ist.

Bei einer weiteren vorteilhaften Ausgestaltung der erfindungsgemäßen Vorrichtung sind die einzelnen Fächer unterschiedlich breit, wobei die Schiebeabdeckungen so breit sind, dass diese wenigstens 90 % des breitesten Faches abdecken können bzw. dass ein unabgedeckter Bereich des Faches nicht breiter als 5 cm, besonders bevorzugt nicht breiter als 2,5 cm und ganz besonders bevorzugt nicht breiter als 1,25 cm ist, wodurch die Vorrichtung in besonders einfacher Weise an eine unterschiedliche Breite bzw. Größe der Anschlusselemente angepasst werden kann. Unter der Breite eines Faches wird dabei die Ausdehnung des Faches in der Bewegungsrichtung der Schiebeabdeckungen verstanden.

Nach einer bevorzugten Weiterbildung der erfindungsgemäßen Vorrichtung erstreckt sich die Trennwand zwischen zwei Fächern, bevorzugt erstrecken sich alle Trennwände, über wenigstens 75 %, bevorzugt 80 %, besonders bevorzugt 90 % und ganz besonders bevorzugt 95 % der Tiefe der durch die Trennwand getrennten Fächer, wobei weiterhin bevorzugt an der Trennwand ein in einen Zwischenraum zwischen der Trennwand und der Schiebeabdeckung ragendes Anschlagblech angeordnet ist. Unter der Tiefe der Fächer ist die räumliche Ausdehnung des Faches in Richtung der Verbindung eines elektrischen Anschlusses bzw. Steckers an dem Anschlusselement und/oder die Richtung rechtwinklig zu einer Bewegungsrichtung der Schiebeabdeckungen zu verstehen.

Das Anschlagblech kann dabei zunächst aus einem beliebigen Material gebildet sein und eine beliebige Form aufweisen. Bevorzugt ist das Anschlagblech flächig an der Trennwand liegend angeordnet, insbesondere daran festgelegt, beispielsweise angeschraubt, angeklebt oder angenietet. Ebenfalls bevorzugt ist das Anschlagblech aus einem Metall, insbesondere Stahl, und besonders bevorzugt aus dem gleichen Material wie die Trennwand und/oder das Gehäuse der Vorrichtung gebildet. Weiterhin bevorzugt erstreckt sich das Anschlagblech über mindestens 80 %, besonders bevorzugt mindestens 90 % und ganz besonders bevorzugt mindestens 95 % der Höhe der Trennwand. Besonders bevorzugt ist das Anschlagblech derart an der Trennwand angeordnet, dass der Anstand zwischen dem Anschlagblech und der Schiebeabdeckung kleiner als 5 cm, besonders bevorzugt kleiner als 2,5 cm und ganz besonders bevorzugt kleiner als 1,25 cm ist.

Bei einer bevorzugten Ausgestaltung der erfindungsgemäßen Vorrichtung weist wenigstens eine Schiebeabdeckung, bevorzugt weisen wenigstens zwei Schiebeabdeckungen und besonders bevorzugt weisen alle Schiebeabdeckungen an einer Seitenfläche, die nicht in der Führung geführt ist, einen verwinkelten, insbesondere um 90° umgebogenen Anschlagabschnitt auf, wodurch besonders effizient ein Aneinandervorbeischieben der Schiebeabdeckungen innerhalb der Führung verhindert wird. Unter einem verwinkelten Abschnitt wird ein flächiger Abschnitt der Schiebeabdeckung verstanden, der gegenüber der übrigen Fläche der Schiebeabdeckung eine abweichende Ausrichtung hat, wobei besonders bevorzugt der verwinkelte Abschnitt sich rechtwinklig zur Bewegungsrichtung der Schiebeabdeckung erstreckt bzw. die Flächennormale des verwinkelten Abschnitts parallel zur Bewegungsrichtung verläuft. Dabei ist der Anschlagabschnitt insbesondere als umgebogene Kante der Schiebeabdeckung gebildet. Weiterhin bevorzugt ragt der Anschlagabschnitt wenigstens abschnittsweise, besonders bevorzugt vollständig in das Innere des Gehäuses.

Gemäß einer bevorzugten Weiterbildung der erfindungsgemäßen Vorrichtung ist der Anschlagabschnitt derart gebildet, dass dieser mit einem Anschlagabschnitt einer weiteren Schiebeabdeckung und/oder mit einem an einer Trennwand angeordneten Anschlagblech und/oder mit einer Trennwand in Kontakt kommen kann, um ein aneinander Vorbeigleiten mehrerer Schiebeabdeckungen zu verhindern und/oder um die Beweglichkeit über eine Trennwand hinaus zu begrenzen. Weiterhin wird durch eine derartige Ausgestaltung der Anschlagabschnitte ein vollständiger Verschluss einer Lücke zwischen einer Trennwand und der Schiebeabdeckung erreicht, wodurch ein besonders wirkungsvoller Berührungsschutz erreicht wird.

Bei einer bevorzugten Ausgestaltung der erfindungsgemäßen Vorrichtung mit drei Fächern und entsprechend zwei Schiebeabdeckungen weisen beide Schiebeabdeckungen jeweils einen Anschlagabschnitt auf der jeweils auf die andere Schiebeabdeckung zuweisenden Seite auf, wodurch einerseits besonders wirkungsvoll ein Aneinandervorbeigleiten der beiden Schiebeabdeckungen verhindert wird und andererseits eine vollständige Abdeckung der Fächer gewährleistet ist sowie ein Umgreifen der Schiebeabdeckungen wirkungsvoll verhindert werden kann.

Nach einer vorteilhaften Weiterbildung der erfindungsgemäßen Vorrichtung erstreckt sich der Anschlagsabschnitt über wenigstens 80 %, bevorzugt wenigstens 90 %, besonders bevorzugt 95 % und ganz besonders bevorzugt über die gesamte Höhe der Schiebeabdeckung zwischen den beiden Führungen, insbesondere einer oberen und einer unteren Führung.

Bei einer bevorzugten Gestaltung der erfindungsgemäßen Vorrichtung ist das Gehäuse einstückig als Rahmen gebildet, der die Fächer zu vier Seiten vollständig umgibt. Weiterhin bevorzugt ist das einstückige Gehäuse auch zu den übrigen zwei Seiten teilweise geschlossen. Insbesondere bevorzugt bildet das Gehäuse an diesen Seiten jeweils einen die Außenseiten der geöffneten Seite schließenden Rahmen. Dabei bildet ein Teil dieses schließenden Rahmens einen Teil der Führungsschiene zur verschieblichen Führung der Schiebeabdeckungen am Gehäuse. Besonders bevorzugt sind die jeweiligen Kanten des Gehäuses durch einen umgebogenen Abschnitt gebildet.

Bei einer weiteren bevorzugten Gestaltung der erfindungsgemäßen Vorrichtung sind alle Anschlusselemente an einer gemeinsamen Halteplatte festgelegt, die besonders bevorzugt an dem Gehäuse, insbesondere im Bereich einer geöffneten Seite des Gehäuses, die den verschieblichen Schiebeabdeckungen gegenüberliegt, angeordnet ist.

Nach einer vorteilhaften Weiterbildung der erfindungsgemäßen Vorrichtung sind die Anschlusselemente jeweils mit einem Relais verbunden, wobei bei einem Anschluss eines Steckers an eines der Anschlusselemente besonders bevorzugt alle übrigen Anschlusselemente mittels des jeweiligen Relais von dem aktiven Anschlusselement getrennt werden.

Ein Ausführungsbeispiel der erfindungsgemäßen Vorrichtung wird nachstehend mit Bezug auf die Zeichnungen näher erläutert. In den Figuren zeigen:
- Fig. 1: eine Vorderansicht einer Vorrichtung mit einer berührungsgeschützten Anordnung elektrischer Anschlusselemente mit zwei Schiebeabdeckungen in unterschiedlichen Positionen,
- Fig. 2: eine perspektivische Ansicht der in Fig. 1 dargestellten Vorrichtung,
- Fig. 3: eine Ansicht der Rückseite der in Fig. 1 dargestellten Vorrichtung aus zwei unterschiedlichen Richtungen und
- Fig. 4: eine perspektivische Ansicht von der Oberseite her auf die in Fig. 1 dargestellten Vorrichtung.

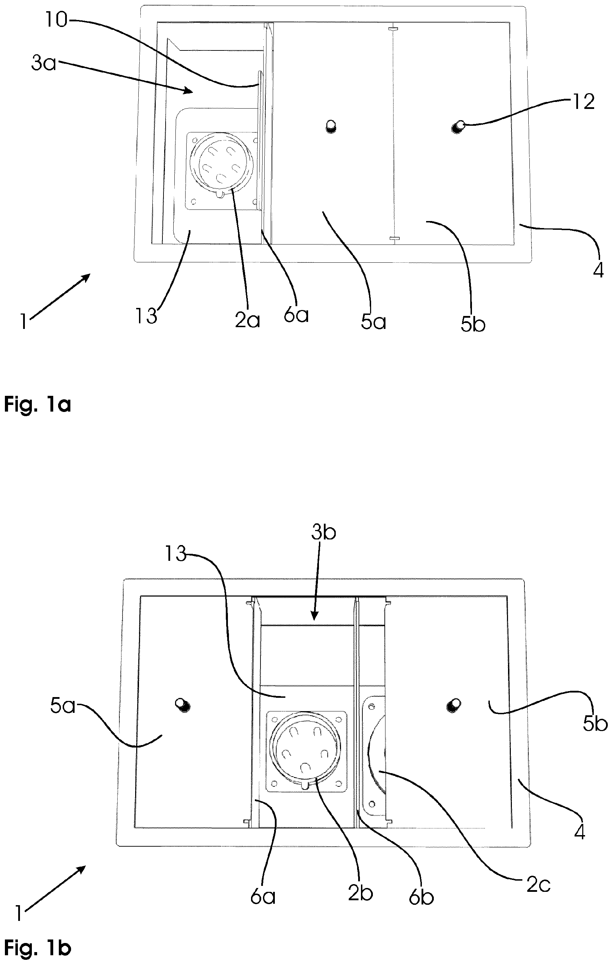

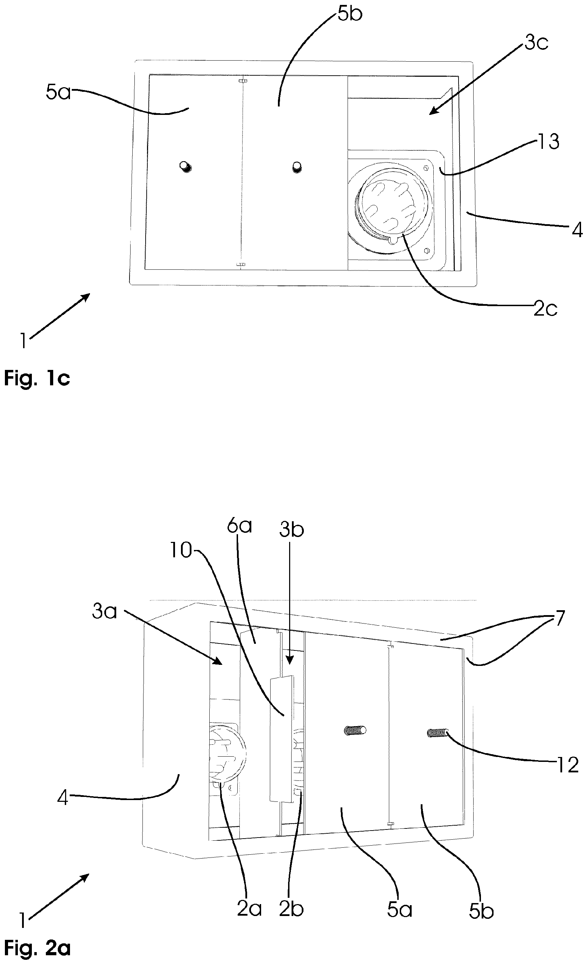

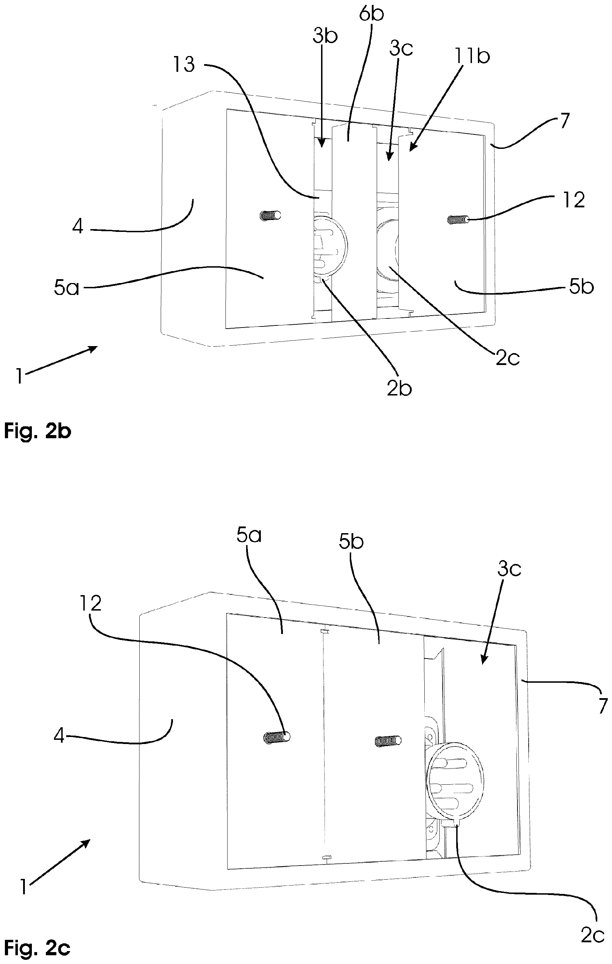

Bei einer in Fig. 1 dargestellten Vorrichtung 1 ist das Innere eines Gehäuses 4 aus pulverbeschichtetem Stahl mittels zwei Trennwänden 6a, b in drei Fächer 3a, b, c unterteilt, wobei in jedem der Fächer 3a, b, c ein elektrisches Anschlusselement 2a, b, c angeordnet ist (siehe auch Fig. 2). Die Breite der einzelnen Fächer 3a, b, c weicht dabei voneinander ab und ist an das jeweils in dem Fach 3a, b, c angeordnete Anschlusselement 2a, b, c angepasst.

Alle drei Anschlusselemente 2a, b, c sind dabei CEE Geräteeinbaustecker, wobei das erste Anschlusselement 2a ein 400 V - 16 A CEE-Stecker, das zweite Anschlusselement 2b ein 400 V - 32 A CEE-Stecker und das dritte Anschlusselement 2c ein 400 V - 63 A CEE-Stecker ist. Alle drei Anschlusselemente 2a, b, c sind an einer Halteplatte 13 angeordnet, die gegenüber der Rückseite des Gehäuses 4 festgelegt ist.

Das Gehäuse 4 ist an der Vorderseite offen gebildet. Dabei wird diese Öffnung teilweise durch zwei Schiebeabdeckungen 5a, b verschlossen, die über die gesamte Breite der Öffnung verschieblich am Gehäuse 4 festgelegt sind (siehe Fig. 1 und 2). Dazu ist jede Schiebeabdeckung 5a, b an zwei Kanten, der oberen und der unteren Kante, in einer gemeinsamen Führungsschiene 8a, b nebeneinander derart gleitend geführt, dass die Schiebeabdeckungen 5a, b nicht aneinander vorbei geschoben werden können. Jeder der Schiebeabdeckungen 5a, b ist derart gebildet, dass diese das entsprechende äußere Fach 3a, c sowie jeweils das mittlere Fach 3b soweit abdecken könne, dass ein Benutzer mit der Hand oder einem Finger nicht mehr in das abgedeckte Fach 3a, b, c greifen kann und insbesondere für den Benutzer das im Fach 3a, b, c befindliche Anschlusselement 2a, b, c unerreichbar ist.

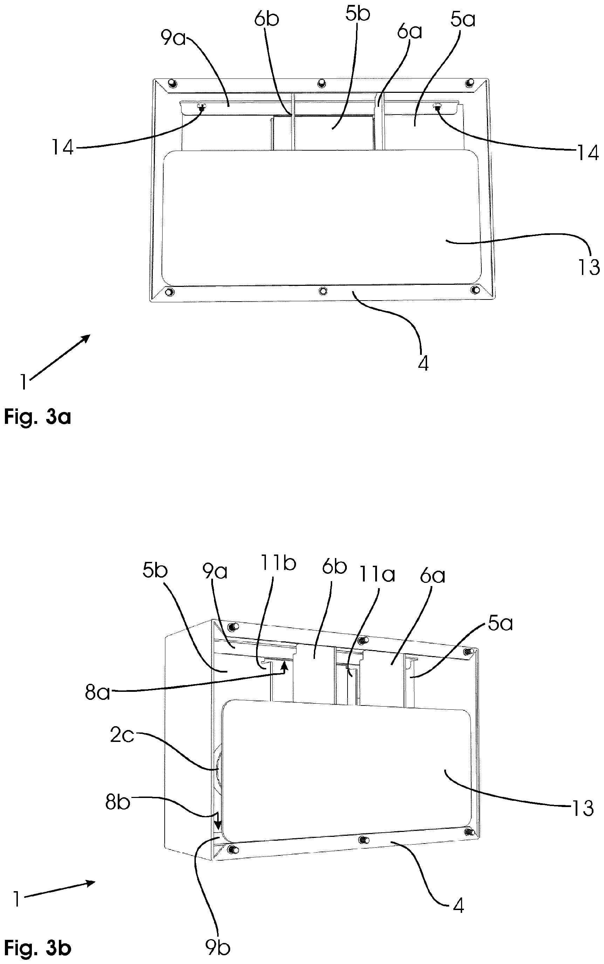

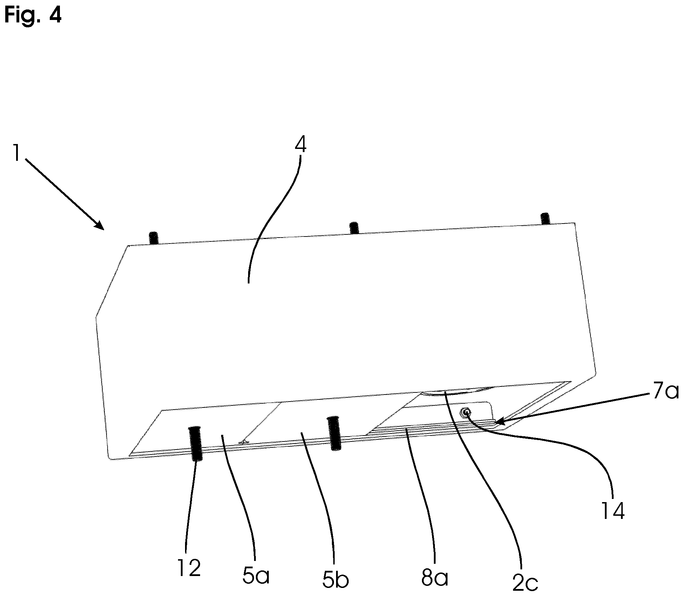

Jeder der beiden Führungsschienen 8a, b ist dabei einerseits aus einem einen Vorderrahmen 7 bildenden Teil des Gehäuses 4 und andererseits aus einer mit dem Gehäuse 4 mittels Schrauben 14 verschraubten Winkelelement 9a, b gebildet, wobei jede der geführten Randbereiche einer Schiebeabdeckung 5a, b zu zwei Seiten an dem Gehäuse 4 und zu einer dritten Seite an der Führungsschiene 8a, b anliegt (siehe Fig. 3 und 4). Somit ergibt sich ein U-Profil zur Führung der einen Seite, beispielsweise der oberen Seite, der Schiebeabdeckungen 5a, b am Gehäuse 4.

Jeder der Schiebeabdeckungen 5a, b ist einstückig aus pulverbeschichtetem Stahl gebildet und weist eine flache Vorderseite auf, in dessen Mitte ein Griff 12 zum Verschieben angeordnet ist. Weiterhin ist die auf die jeweils andere Schiebeabdeckung 5a, b zuweisende Kante jeder Schiebeabdeckung 5a, b einen Anschlagabschnitt 11a, b bildend um 90° in Richtung des Inneren des Gehäuses 4 gebogen, womit die beiden Schiebeabdeckungen 5a, b aneinander in Anlage kommen können und verhindert wird, dass die beiden Schiebeabdeckungen 5a, b in der Führungsschiene 8a, b aneinander vorbeigleiten können (siehe Fig. 1a und Fig. 1c).

An einer der beiden Trennwände 6a ist ein Anschlagblech 10 festgelegt, das mit dem Anschlagabschnitt 11a der ersten Schiebeabdeckung 5a zusammenwirken kann, um zu verhindern, dass in den Zwischenraum zwischen Trennwand 6a und Schiebeabdeckung 5a gegriffen werden kann (siehe Fig.1a und Fig. 2a).

Die Breite der Fächer 3a, b, c sowie der Schiebeabdeckungen 5a, b ist derart gewählt, dass nach dem Verbinden eines der Anschlusselemente 2a, b, c mit einem elektrischen Anschlusskabel die Schiebeabdeckungen 5a, b aufgrund der Position des Anschlusskabels bzw. einer daran angeordneten Anschlussbuchse lediglich soweit verschoben werden können, dass die übrigen Anschlusselemente 2a, b, c durch die Schiebeabdeckungen 5a, b nach wie vor derart abgedeckt sind, dass ein Benutzer diese nicht berühren kann.

### Bezugszeichenliste

- 1: Vorrichtung
- 2a, b, c: Anschlusselement
- 3a, b, c: Fächer
- 4: Gehäuse
- 5a, b: Schiebeabdeckung
- 6a, b: Trennwand
- 7: Vorderrahmen
- 8a, b: Führungsschiene
- 9a, b: Winkelelement
- 10: Anschlagblech
- 11a, b: Anschlagabschnitt
- 12: Griff
- 13: Halteplatte
- 14: Schraube

## Patentansprüche

1. Vorrichtung (1) mit einer berührungsgeschützten Anordnung elektrischer Anschlusselemente (2a, b, c), insbesondere für eine mobile Elektroheizzentrale, mit
- einem in mehrere Fächer (3a, b, c) unterteilten, zu einer Seite offenen Gehäuse (4),
- mehreren jeweils in einem der Fächer (3a, b, c) angeordneten elektrischen An-schlusselementen (2a, b, c) und
- je einer Schiebeabdeckung (5a, b) für alle Fächer (3a, b, c) ab dem zweiten Fach, sodass wenigstens alle Fächer (3a, b, c), die ein Anschlusselement (2a, b, c) aufweisen, bis auf ein einziges Fach (3a, b, c) mittels der Schiebeabdeckungen (5a, b) geschlossen werden können, wobei alle Schiebeabdeckungen (5a, b) in einer gemeinsamen Führung (8a, b) verschieblich angeordnet sind,
**dadurch gekennzeichnet, dass**
- die wenigstens eine, bevorzugt mehrere Schiebeabdeckungen (5a, b) derart verschieblich am Gehäuse (4) festgelegt sind, dass wenn eines der Anschlusselemente (2a, b, c) zugänglich ist, alle weiteren Anschlusselemente (2a, b, c) durch je eine Schiebeabdeckung (5a, b) abgedeckt werden.

2. Vorrichtung nach Anspruch 1, **dadurch gekennzeichnet, dass** die einzelnen Fächer (3a, b, c) in dem Gehäuse (4) durch jeweils eine Trennwand (6a, b) von den benachbarten Fächern (3a, b, c) abgetrennt sind.

3. Vorrichtung nach wenigstens einem der vorhergehenden Ansprüche, **dadurch gekennzeichnet, dass** die Führung als Führungsschienen (8a, b) gebildet ist, wobei alle Schiebeabdeckungen (5a, b) jeweils an zwei Kanten und über die gesamte Breite der Schiebeabdeckungen (5a, b) in deren Bewegungsrichtung in einer Führungsschiene (8a, b) geführt sind.

4. Vorrichtung nach wenigstens einem der vorhergehenden Ansprüche, **dadurch gekennzeichnet, dass** jede der Führungsschienen (8a, b) aus einem die Schiebeabdeckung (5a, b) von einer Richtung her abstützenden Teil des Gehäuses (4) und aus einem die Schiebeabdeckung (5a, b) von einer gegenüberliegenden Richtung her abstützenden Winkelelement (9a, b) gebildet ist, wobei das Winkelelement (9a, b) einstückig gebildet ist.

5. Vorrichtung nach wenigstens einem der vorhergehenden Ansprüche, **dadurch gekennzeichnet, dass** die einzelnen Fächer (3a, b, c) unterschiedlich breit sind, wobei die Schiebeabdeckungen (5a, b) so breit sind, dass diese wenigstens 90% des breitesten Faches (3a, b, c) abdecken können.

6. Vorrichtung nach wenigstens einem der vorhergehenden Ansprüche, **dadurch gekennzeichnet, dass** die Trennwand (6a, b) zwischen zwei Fächern (3a, b, c) sich über wenigstens 75 % der Tiefe der Fächer erstreckt, wobei an der Trennwand (6a, b) ein in einen Zwischenraum zwischen der Trennwand (6a, b) und der Schiebeabdeckung (5a, b) ragendes Anschlagblech (10) angeordnet ist.

7. Vorrichtung nach wenigstens einem der vorhergehenden Ansprüche, **dadurch gekennzeichnet, dass** wenigstens eine Schiebeabdeckung (5a, b), bevorzugt wenigstens zwei Schiebeabdeckungen (5a, b) an einer Seitenfläche, die nicht in der Führung geführt ist, einen verwinkelten Anschlagabschnitt (11a, b) aufweisen.

8. Vorrichtung nach wenigstens einem der vorhergehenden Ansprüche, **dadurch gekennzeichnet, dass** der Anschlagabschnitt (11a, b) derart gebildet ist, dass dieser mit einem Anschlagabschnitt (11a, b) einer weiteren Schiebeabdeckung (5a, b) in Kontakt kommen kann.

9. Vorrichtung nach wenigstens einem der vorhergehenden Ansprüche, **dadurch gekennzeichnet, dass** der Anschlagabschnitt (11a, b) derart gebildet ist, dass dieser mit einem an einer Trennwand (6a, b) angeordneten Anschlagblech (10) in Kontakt kommen kann.

10. Vorrichtung nach wenigstens einem der vorhergehenden Ansprüche, **dadurch gekennzeichnet, dass** der Anschlagabschnitt (11a, b) derart gebildet ist, dass dieser mit einer Trennwand (6a, b) in Kontakt kommen kann.

11. Mobile Elektroheizzentrale mit einer Vorrichtung (1) mit einer berührungsgeschützten Anordnung elektrischer Anschlusselemente (2a, b, c) nach wenigstens einem der vorhergehenden Ansprüche, wobei der Anschluss der Elektroheizzentrale an das elektrische Leitungsnetz über die Vorrichtung (1) erfolgt.

## Claims

1. A device (1) comprising a contact-protected arrangement of electrical connection elements (2a, b, c), in particular for a mobile electrical heating system, comprising
- a housing (4) that is divided into a plurality of compartments (3a, b, c) and that is open on one side,
- a plurality of electrical connection elements (2a, b, c) each arranged in one of the compartments (3a, b, c) and
- a sliding cover (5a, b) for each of the compartments (3a, b, c) from the second compartment onward, such that at least all compartments (3a, b, c) comprising a connection element (2a, b, c) can be closed by means of the sliding covers (5a, b) apart from a single compartment (3a, b, c), all sliding covers (5a, b) being arranged in a slidable manner in a common guide (8a, b),
**characterized in that**
- the at least one, preferably a plurality of sliding covers (5a, b) are secured to the housing (4) in a slidable manner such that when one of the connection elements (2a, b, c) is accessible, all other connection elements (2a, b, c) are covered by means of one sliding cover (5a, b) each.

2. The device according to claim 1, **characterized in that** the individual compartments (3a, b, c) in the housing (4) are in each case separated from the neighboring compartments (3a, b, c) by means of a separating wall (6a, b).

3. The device according to at least one of the preceding claims, **characterized in that** the guide is formed as guide rails (8a, b), all sliding covers (5a, b) being guided in the movement direction thereof in a guide rail (8a, b) in each case on two edges and over the entire width of the sliding covers (5a, b).

4. The device according to at least one of the preceding claims, **characterized in that** each of the guide rails (8a, b) is formed of a portion of the housing (4) supporting the sliding cover (5a, b) from one direction and an angular element (9a, b) supporting the sliding cover (5a, b) from an opposite direction, the angular element (9a, b) being integrally formed.

5. The device according to at least one of the preceding claims, **characterized in that** the individual compartments (3a, b, c) have different widths, the sliding covers (5a, b) being so wide that they can cover at least 90% of the widest compartment (3a, b, c).

6. The device according to at least one of the preceding claims, **characterized in that** the separating wall (6a, b) between two compartments (3a, b, c) extends over at least 75% of the depth of the compartments, a stop plate (10) that projects into an intermediate space between the separating wall (6a, b) and the sliding cover (5a, b) being arranged on the separating wall (6a, b).

7. The device according to at least one of the preceding claims, **characterized in that** at least one sliding cover (5a, b), preferably at least two sliding covers (5a, b), comprise an angled stop portion (11 a, b) on a side surface not guided in the guide.

8. The device according to at least one of the preceding claims, **characterized in that** the stop portion (11a, b) is formed such that it can come into contact with a stop portion (11a, b) of another sliding cover (5a, b).

9. The device according to at least one of the preceding claims, **characterized in that** the stop portion (11a, b) is formed such that it can come into contact with a stop plate (10) arranged on a separating wall (6a, b).

10. The device according to at least one of the preceding claims, **characterized in that** the stop portion (11a, b) is formed such that it can come into contact with a separating wall (6a, b).

11. A mobile electrical heating system comprising a device (1) comprising a contact-protected arrangement of electrical connection elements (2a, b, c) according to at least one of the preceding claims, wherein the electrical heating system is connected to the electrical power grid via the device (1).

## Revendications

1. Dispositif (1) pourvu d'un agencement d'éléments de connexion électriques (2a, b, c), protégé contre les risques de contact, destiné en particulier à une centrale de chauffage électrique mobile, avec :
- un boîtier (4) ouvert sur un côté, divisé en plusieurs compartiments (3a, b, c),
- plusieurs éléments de connexion électriques (2a, b, c) disposés respectivement dans l'un des compartiments (3a, b, c),
- respectivement un couvercle coulissant (5a, b) recouvrant tous les compartiments (3a, b, c) à partir du deuxième compartiment, de sorte qu'au moins tous les compartiments (3a, b, c), qui présentent un élément de connexion (2a, b, c), à l'exception d'un seul compartiment (3a, b, c) puissent être fermés à l'aide des couvercles coulissants (5a, b), dans lequel tous les couvercles coulissants (5a, b) sont disposés de manière à coulisser dans une glissière commune (8a, b),
**caractérisé en ce**
- **qu'**au moins un, de préférence plusieurs couvercles coulissants (5a, b) sont fixés au boîtier (4) de façon coulissante de sorte que, lorsqu'un des éléments de connexion (2a, b, c) est accessible, tous les autres éléments de connexion (2a, b, c) soient recouverts par respectivement un couvercle coulissant (5a, b).

2. Dispositif selon la revendication 1, **caractérisé en ce que** les différents compartiments (3a, b, c) sont respectivement séparés par une cloison (6a, b) des compartiments voisins (3a, b, c) dans le boîtier (4).

3. Dispositif selon l'une au moins des revendications précédentes, **caractérisé en ce que** la glissière est établie sous la forme de rails de guidage (8a, b), dans lequel tous les couvercles coulissants (5a, b) sont guidés dans un rail de guidage (8a, b) respectivement sur deux bords et sur toute la largeur des couvercles coulissants (5a, b) dans le sens de leur déplacement.

4. Dispositif selon l'une au moins des revendications précédentes, **caractérisé en ce que** chacun des rails de guidage (8a, b) est constitué par une partie du boîtier (4) supportant le couvercle coulissant (5a, b) d'un côté et d'une cornière (9a, b) supportant le couvercle coulissant (5a, b) d'un côté opposé, dans lequel la cornière (9a, b) est formée d'un seul tenant.

5. Dispositif selon l'une au moins des revendications précédentes, **caractérisé en ce que** les différents compartiments (3a, b, c) divergent par leur largeur, dans lequel les couvercles coulissants (5a, b) présentent une largeur telle que ceux-ci peuvent recouvrir au moins 90% du compartiment (3a, b, c) le plus large.

6. Dispositif selon l'une au moins des revendications précédentes, **caractérisé en ce que** la cloison (6a, b) entre deux compartiments (3a, b, c) s'étend sur au moins 75% de la profondeur des compartiments, dans lequel une tôle de butée (10) dépassant dans un interstice entre la cloison (6a, b) et le couvercle coulissant (5a, b) est disposée sur la cloison (6a, b).

7. Dispositif selon l'une au moins des revendications précédentes, **caractérisé en ce qu'**au moins un couvercle coulissant (5a, b), de préférence au moins deux couvercles coulissants (5a, b) présentent une partie de butée en angle (11a, b) sur une face latérale, qui n'est pas guidée dans la glissière.

8. Dispositif selon l'une au moins des revendications précédentes, **caractérisé en ce que** la partie de butée (11a, b) est constituée de sorte que celle-ci puisse entrer en contact avec une partie de butée (11a, b) d'un autre couvercle coulissant (5a, b).

9. Dispositif selon l'une au moins des revendications précédentes, **caractérisé en ce que** la partie de butée (11a, b) est constituée de sorte que celle-ci puisse entrer en contact avec une tôle de butée (10) disposée sur une cloison (6a, b).

10. Dispositif selon l'une au moins des revendications précédentes, **caractérisé en ce que** la partie de butée (11a, b) est constituée de sorte que celle-ci puisse entrer en contact avec une cloison (6a, b).

11. Centrale de chauffage électrique mobile avec un dispositif (1) pourvu d'un agencement d'éléments de connexion électriques (2a, b, c), protégé contre les risques de contact selon l'une au moins des revendications précédentes, dans laquelle le raccordement de la centrale de chauffage électrique au réseau de distribution électrique se fait par le biais du dispositif (1).
